# EUROPÄISCHE PATENTSCHRIFT

(11) **EP 0 940 314 B1**
(45) Veröffentlichungstag und Bekanntmachung des Hinweises auf die Patenterteilung: **21.01.2004**
(21) Anmeldenummer: 99101943.1
(22) Anmeldetag: 30.01.1999
(51) Int. Cl.: B61D 17/04, B62D 27/02, B62D 33/04, F16B 7/04

(54) **Verbindung von Leichtbauprofilen**
Joint for lightweight profiles
Connexion pour profilés légers

(30) Priorität: 05.03.1998 DE 19809338
(43) Veröffentlichungstag der Anmeldung: 08.09.1999
(73) Patentinhaber: SIEMENS AKTIENGESELLSCHAFT, 80333 München (DE)
(72) Erfinder: Altenburg, Klaus, Dr.-Ing., 52146 Würselen (DE); Zimmermann, Michael, Dipl.-Ing., 52066 Aachen (DE)

(56) Entgegenhaltungen:
- EP-A- 0 239 781
- DE-A- 1 950 086
- DE-A- 3 527 238
- US-A- 2 496 032
- US-A- 3 873 219

## Beschreibung

Die Erfindung betrifft eine versenkte Verbindung von zwei Leichtbauprofilen, bei der jedes Leichtbauprofil von einem Formkörper durchdrungen wird, der eine zentrale Bohrung und zur Außenseite der Verbindung hin eine Ausnehmung aufweist, die eine Sitzfläche hat, auf der jeweils eines der verbreiterten Enden eines Spannbolzens aufliegt, der durch die zentralen Bohrungen der beiden Formkörper hindurchgeführt und daselbst verriegelt ist, wobei einer der beiden Formkörper mit seinem Leichtbauprofil verschweißt ist.

Eine Verbindung von zwei Leichtbauprofilen mit den zuvor genannten Merkmalen gehört im Hinblick auf die Druckschrift EP 0 899 465 A2 zum Stand der Technik gemäß Artikel 54 Absatz 3 des Europäischen Patentübereinkommens. Bei dieser älteren Verbindung sind beide Formkörper durch Schweißen mit dem jeweiligen Leichtbauprofil verbunden.

In Fällen, wo zwei langgestreckte Leichtbauprofile zueinander parallel verlaufend verbunden werden müssen, können unterschiedliche Abstände zwischen den beiden Profilen auftreten. Ein solcher Fall ist beispielsweise gegeben, beim Einbau des Türrahmens in die Seitenwand eines Eisenbahnwaggons. Hierbei wird das langgestreckte Rahmenprofil des Türrahmens mit einem entsprechenden langgestreckten Profil oder Teilen eines Profils der Seitenwand verbunden. Bei der Verbindung können unterschiedlich große Abstände längs den beiden zu verbindenden Profilen auftreten. Diese Abstände sind zwar nicht groß, sie liegen im Millimeterbereich, gleichwohl müssen sie in geeigneter Weise überbrückt werden, damit sich der Türrahmen nicht verzieht und an der Seitenwand in allen Verbindungspunkten eine ausreichende gleich große Festigkeit erhält.

Aus diesem Anwendungsbeispiel ergibt sich die Aufgabe für die Erfindung, die Verbindung von zwei in ihrer Längsrichtung und parallel miteinander zu verbindenden Leichtbauprofilen derart auszugestalten, dass auch unterschiedliche Abstände zwischen einzelnen Verbindungspunkten der beiden Leichtbauprofile auf einfache Weise ausgeglichen werden können.

Die Aufgabe wird erfindungsgemäß dadurch gelöst, dass der andere Formkörper ebenfalls kraftübertragend, jedoch in Längsrichtung einstellbar mit dem zugehörigen Leichtbauprofil gekuppelt ist.

Eine recht einfache konstruktive Lösung wurde darin gefunden, das man den längs verschiebbar gelagerten Formkörper innerhalb einer Hülse anordnet, die ihrerseits mit dem zugehörigen Leichtbauprofil fest und unlösbar verbunden ist. Hierzu weist die Hülse einen Bund auf, über den sie mit dem zugehörigen Leichtbauprofil unter teilweiser Opferung des Bundes durch Laserstrahl verschweißt ist. Die Schweißnaht befindet sich vorzugsweise auf der Innenseite der Verbindung. Die Hülse hat ein Innengewinde mit geringer Steigung und der zugehörige Formkörper hat ein Außengewinde, wobei das Innengewinde und das Außengewinde ineinander greifen. Zusätzlich weist der Formkörper auch noch eine Schlüsselfläche auf, wo ein Werkzeug angesetzt werden kann, mit Hilfe dessen der Formkörper in die Hülse hineingedreht werden kann. Einer besonderen Arretierung der einmal eingestellten Gewindeverbindung bedarf es nicht, weil die beiden Leichtbauprofile mit den zur Innenseite hinweisenden Flächen ihrer Formkörper durch den Schließringbolzen derart fest aufeinander gepresst werden, dass ein ungewolltes Herausdrehen des Formkörpers aus dem Gewinde nicht mehr möglich ist.

Nachfolgend wird die Erfindung an einem Ausführungsbeispiel näher beschrieben. Es zeigen jeweils maßstabsgetreu die
- Fig.1 einen Querschnitt durch die Verbindung und
- Fig.2 eine Draufsicht auf die Verbindung.

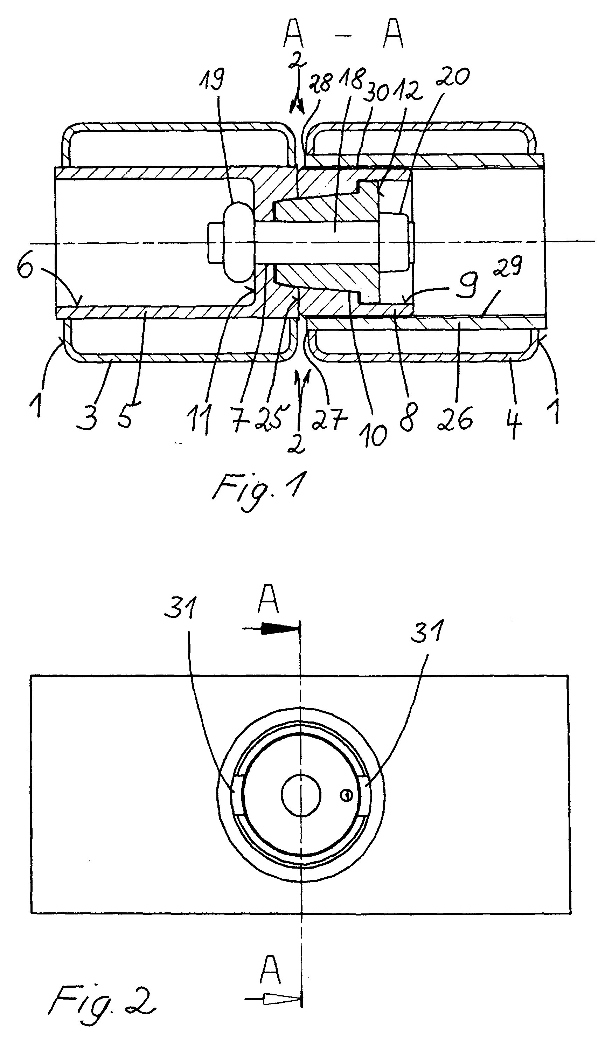

Der in der Fig.1 gezeigte Querschnitt durch die Verbindung entspricht einer Schnittlinie längs der Linie A - A der Fig.2. Mit der Ziffer 1 sind jeweils die Außenseiten der beiden miteinander verbundenen langgestreckten Rechteckprofile 3 und 4 bezeichnet. Das auf der linken Seite der Figur 1 dargestellte rechteckige Hohlprofil 3 wird von einem Formkörper 5 durchdrungen, der mit dem Hohlprofil 3 fest und unlösbar verbunden ist. Das auf der rechten Seite dargestellte Hohlprofil 4 wird von einem Formkörper 8 durchdrungen, der längsverschieblich in einer Hülse 26 angeordnet ist, die ihrerseits mit dem Hohlprofil 4 fest und unlösbar verbunden ist. Diese Verbindung wird beispielsweise durch einen Bund 27 erzielt , der unter der Einwirkung eines Laserstrahls teilweise zu einer Schweißnaht 28 umgewandelt worden ist. Die Hülse 26 hat eine zylindrische Form und die Schweißnaht 28 ist um den äußeren Umfang des Bundes 27 herumgelegt. Die Schweißnaht 28 ist auf der Innenseite 2 der beiden miteinander verbundenen Hohlprofile 3 und 4 gelegen.

Die Hülse 26 ist mit einem Innengewinde 29 versehen, in welches ein Außengewinde eingreift, mit dem der Formkörper 8 auf seiner Außenseite versehen ist. Die Gewindeverbindung 29, 30 hat eine geringe Steigung, wodurch eine sehr feinfühlige Einstellung des gegenseitigen Abstandes (nicht gezeigt) auf der Innenseite 2 zwischen den beiden Hohlprofilen 3 und 4 möglich wird. An der Fügestelle 25 liegt der Formkörper 8 auf den Formkörper 5 auf. Die gesamte Verbindung wird von dem Schließringbolzen 15 gehalten.

Zur Außenseite 1 hin weist der einschraubbare Formkörper 8 auch noch Schlüsselflächen 31 auf, über die er mit Hilfe von geeigneten Werkzeugen (nicht gezeigt) in die Hülse 26 hineingeschraubt werden kann.

### Ziffernverzeichnis

- 1: Außenseite
- 2: Innenseite
- 3: Hohlprofil
- 4: Hohlprofil
- 5: Formkörper
- 6: Ausnehmung
- 7: zentrale Bohrung
- 8: Formkörper
- 9: Ausnehmung
- 10: zentrale Bohrung
- 11: Sitzfläche
- 12: Sitzfläche
- 18: Spannbolzen
- 25: Fügestelle
- 26: Hülse
- 27: Bund
- 28: Schweißnaht
- 29: Innengewinde
- 30: Außengewinde
- 31: Schlüsselfläche

## Patentansprüche

1. Versenkte Verbindung von zwei Leichtbauprofilen (3, 4), bei der jedes Leichtbauprofil (3, 4) von einem Formkörper (5, 8) durchdrungen wird, der eine zentrale Bohrung (7,10) und zur Außenseite (1) der Verbindung hin eine Ausnehmung (6, 9) aufweist, die eine Sitzfläche (11, 12) hat, auf der jeweils eines der verbreiterten Enden (19, 20) eines Spannbolzens (18) aufliegt, der durch die zentralen Bohrungen (7, 10) der beiden Formkörper (5, 8) hindurchgeführt und daselbst verriegelt ist, wobei einer der beiden Formkörper (5, 8) mit seinem Leichtbauprofil (3, 4) verschweißt ist, **dadurch gekennzeichnet, dass** der andere Formkörper (5, 8) ebenfalls kraftübertragend, jedoch in Längsrichtung einstellbar mit dem zugehörigen Leichtbauprofil (3 oder 4) gekuppelt ist.

2. Verbindung nach Anspruch 1, **dadurch gekennzeichnet, dass** der andere Formkörper (5 oder 8) in einer Hülse (26) gelagert ist, die mit dem zugehörigen Leichtbauprofil (3 oder 4) fest und unlösbar verbunden ist.

3. Verbindung nach Anspruch 2, **dadurch gekennzeichnet, dass** die Hülse (26) einen Bund (27) aufweist, über den sie mit dem zugehörigen Leichtbauprofil (3 oder 4) unter zumindest teilweiser Opferung des Bundes (27) durch Laserstrahl verschweißt ist.

4. Verbindung nach Anspruch 3, **dadurch gekennzeichnet, dass** die Schweißnaht (28) auf der Innenseite (2) der Verbindung liegt.

5. Verbindung nach einem der Ansprüche 1 bis 3, **dadurch gekennzeichnet, dass** die Hülse (26) ein Innengewinde (29) und der zugehörige Formkörper (5 oder 8) ein Außengewinde (30) aufweist, die ineinander greifen.

6. Verbindung nach Anspruch 5, **dadurch gekennzeichnet, dass** der mit einem Außengewinde (30) versehene Formkörper (5 oder 8) wenigstens eine Schlüsselfläche (31) aufweist, die zur Außenseite (1) der Verbindung hinweist.

## Claims

1. Recessed connection of two lightweight profiles (3, 4), in the case of which each lightweight profile (3, 4) is penetrated by a shaped body (5, 8) which has a central bore (7, 10) and, in the direction of the outside (1) of the connection, a recess (6, 9) having a seat surface (11, 12) on which rests in each case one of the widened ends (19, 20) of a clamping bolt (18), which is guided through the central bores (7, 10) of the two shaped bodies (5, 8) and is itself locked there, one of the two shaped bodies (5, 8) being welded to its lightweight profile (3, 4), **characterized in that** the other shaped body (5, 8) is coupled to the associated lightweight profile (3 or 4) such that it likewise transmits forces, but can be adjusted in the longitudinal direction.

2. Connection according to Claim 1, **characterized in that** the other shaped body (5 or 8) is mounted in a sleeve (26) which is connected in a fixed and non-releasable manner to the associated lightweight profile (3 or 4).

3. Connection according to Claim 2, **characterized in that** the sleeve (26) has a collar (27) via which it is welded to the associated lightweight profile (3 or 4) by a laser beam, with at least some of the collar (27) being sacrificed in the process.

4. Connection according to Claim 3, **characterized in that** the weld seam (28) is located on the inside (2) of the connection.

5. Connection according to one of Claims 1 to 3, **characterized in that** the sleeve (26) has an internal thread (29) and the associated shaped body (5 or 8) has an external thread (30), the threads engaging one inside the other.

6. Connection according to Claim 5, **characterized in that** the shaped body (5 or 8), which is provided with an external thread (30), has at least one wrench-attachment surface (31) which is oriented in the direction of the outside (1) of the connection.

## Revendications

1. Assemblage noyé de profilés (3,4) de construction légère, dans lequel chaque profilé (3, 4) de construction légère est traversé par une pièce (5, 8) de forme qui a un trou (7, 10) central et, vers le côté (1) extérieur de l'assemblage, un évidemment (6, 9) qui a une surface (11, 12) d'assise sur laquelle repose respectivement l'une des extrémités (19, 20) élargie d'un boulon (18) de blocage, qui passe dans les trous (7, 10) centraux des deux pièces (5, 8) de forme et y est verrouillé soi-même, l'une des deux pièces (5, 8) de forme étant soudée à son profilé (3, 4) de construction légère, **caractérisé en ce que** l'autre pièce (5, 8) de forme est couplée également à transmission de force mais en étant réglable dans la direction longitudinale, au profilé (3 ou 4) associé de construction légère.

2. Assemblage suivant la revendication 1, **caractérisé en ce que** l'autre pièce (5 ou 8) de forme est montée dans une douille (26) qui est assemblée, solidement et sans possibilité d'être détachée, au profilé (3 ou 4) associé de construction légère.

3. Assemblage suivant la revendication 2, **caractérisé en ce que** la douille (26) comporte un collet (27) par lequel elle est soudée par faisceau laser au profilé (3 ou 4) associé de construction légère, en sacrifiant au moins en partie le collet (27)

4. Assemblage suivant la revendication 3, **caractérisé en ce que** le cordon (28) de soudure se trouve du côté intérieur de l'assemblage.

5. Assemblage suivant l'une des revendications 1 à 3, **caractérisé en ce que** la douille (6) a un taraudage (29) et la pièce (5 ou 8) associée de forme a un filetage (30) qui se visse l'un dans l'autre.

6. Assemblage suivant la revendication 5, **caractérisé en ce que** la pièce (5 ou 8) de forme munie du filetage (30) a au moins une surface (31) pour une clé qui est tournée vers le côté (1) extérieur de l'assemblage.
